(19) Europäisches Patentamt
European Patent Office
Office européen des brevets

(11) Veröffentlichungsnummer: **0 029 487**
**B1**

(12) # EUROPÄISCHE PATENTSCHRIFT

(45) Veröffentlichungstag der Patentschrift: **29.09.82**

(51) Int. Cl.³: **C 09 D 3/36,** C 08 C 19/36, C 09 D 5/40, C 25 D 13/06

(21) Anmeldenummer: **80105382.8**

(22) Anmeldetag: **09.09.80**

(54) **Wärmehärtbare wässrige Überzugsmittel und deren Verwendung.**

(30) Priorität: **10.11.79 DE 2945459**

(43) Veröffentlichungstag der Anmeldung: **03.06.81 Patentblatt 81/22**

(45) Bekanntmachung des Hinweises auf die Patenterteilung: **29.09.82 Patentblatt 82/39**

(84) Benannte Vertragsstaaten: **AT FR GB IT NL SE**

(56) Entgegenhaltungen:
**FR-A-2 097 843**
**FR-A-2 303 053**
**FR-A-2 307 293**
**US-A-3 974 129**

(73) Patentinhaber: **CHEMISCHE WERKE HÜLS AG, Postfach 1320, D-4370 Marl 1 (DE)**

(72) Erfinder: **Bartz, Wilfried, Dr., Am Alten Sportplatz 17 a, D-4370 Marl (DE)**

**EP 0 029 487 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Wärmehärtbare wässrige Überzugsmittel und deren Verwendung.

Gegenstand der Erfindung sind wärmehärtbare wässrige Überzugsmittel für Metalloberflächen auf der Grundlage einer Mischung aus Bindemittel, ggf. organischen Lösemitteln sowie ggf. Pigmenten, Füllstoffen und weiteren üblichen Hilfs- und Zusatzstoffen, die als Bindemittel

A. 60 bis 95 Gew.% einer wasserlöslichen bzw. wasserdispergierbaren, mit basischen Verbindungen zumindest teilweise neutralisierten und veresterten Additionsverbindungen aus 10 bis 35 Gew.% einer oder mehrerer $\alpha$, $\beta$-ungesättigter Dicarbonsäuren und 65 bis 90 Gew.% eines bei 20°C flüssigen Butadienpolymerisats mit mindestens 50 mol% Butadieneinheiten und einem Molgewicht im Bereich von 400 bis 6000

und

B. 5 bis 40 Gew.% eines wasserlöslichen bzw. wasserdispergierbaren Vernetzerharzes mit im Mittel mindestens 2 reaktiven Gruppen pro mol

enthalten.

Derartige Überzugsmittel sind bekannt (DE-B-Nr. 2120962, DE-A-Nr. 1720576). Neben allgemein anerkannten Vorzügen haften den genannten Bindemitteln bezüglich der Verarbeitung und/oder der erzielbaren Filmeigenschaften auch spezifische Mängel an. So kannn man durch Kombination wärmereaktiver Formaldehydharze von Phenolcarbonsäuren mit partiell veresterten, carboxylgruppentragenden Butadienpolymerisaten zu wässrigen Überzugsmitteln mit guter Lagerstabilität (Badstabilität) gelangen, die Beschichtung mit erhöhter Härte liefern. In Kombination mit Bindemitteln auf Basis von Polybutadienen mit hohem cis-1,4-Anteil, die als Alleinbindemittel einen guten Korrosionsschutz bieten, bewirkt der Zusatz dieser Vernetzerharze mit steigender Menge jedoch eine zunehmende Unterrostung der Filme im Salzsprühtest.

Aufgabe der Erfindung war es, unter Beibehaltung der für diese Überzugsmittel bekannten guten Allgemeineigenschaften, die geschilderten Nachteile zu vermeiden.

Die Aufgabe wurde dadurch gelöst, dass die Additionsverbindung (A) zu 10 bis 70 Äquivalentprozent, bezogen auf die Säurezahl, mit einem oder mehreren Alkoholen der allgemeinen Formel (I)

$$R^4-CH=\underset{R^1}{\underset{|}{C}}-\underset{R^2}{\underset{|}{CH}}-(\underset{R^3}{\underset{|}{CH}})_n-OH \qquad (I)$$

verestert ist und dass mindestens eine der reaktiven Gruppen des Vernetzerharzes (B) der allgemeinen Formel (II)

$$-CH_2-\underset{R^1}{\underset{|}{C}}=CH-R^2 \qquad (II)$$

entspricht, wobei in den allgemeinen Formeln (I) und (II) $R^1$, $R^2$ und $R^3$ gleich oder ungleich sein können und Wasserstoff oder eine Methylgruppe bedeuten, $R^4$ Wasserstoff oder eine Alkylgruppe mit 1 bis 5 C-Atomen bedeutet und n für 0 oder 1 steht.

Die Säurezahlen werden durch Titration in Pyridin/Wasser mit KOH ermittelt.

Für die Komponente A. der erfindungsgemässen Überzugsmittel besonders geeignete ungesättigte Alkohole sind z. B. Allylalkohol, Methallylalkohol, Crotylalkohol, 1-Buten-3-ol, 2-Ethylhexen-2-ol-1. Die hier genannten Alkohole können für sich oder im Gemisch eingesetzt werden. Bevorzugt werden solche veresterten Additionsprodukte A. eingesetzt, deren Veresterungsgrad 25 bis 45 Äquivalentsprozent beträgt.

Neben den erfindungsgemässen ungesättigten Alkoholen können zusätzlich gesättigte Alkohole verwendet werden. Beispiele für diese Gruppe von Alkoholen sind Methanol, Ethanol, Propanole, Butanole, Ethylenglykolmonoakylether mit 1 bis 4 C-Atomen im Alkylrest, Benzylalkohol.

Sowohl bei den erfindungsgemässen ungesättigten, als auch bei den zusätzlich zu verwendenden gesättigten Alkoholen werden vorzugsweise solche verwendet, die primäre Hydroxylgruppe besitzen.

Zur Herstellung der Additionsverbindung der Komponente A. werden als Basispolymere hierfür bekannte Butadienhomo- und/oder -copolymerisate verwendet. Als Comonomere kommen insbesondere andere konjugierte Diolefine, wie z. B. 1,3-Pentadien, Isopren o. ä. infrage. Ferner können in Mengen bis zu 30 mol% aliphatische Monoolefine, wie Ethylen, Propylen oder aromatische Vinylverbindungen, wie z. B. Styrol, als Comonomere eingesetzt werden. Die Basispolymeren sollen mindestens 50 mol%, vorzugsweise mindestens 70 mol% und insbesondere mindestens 90 mol% Butadieneinheiten enthalten. Für die erfindungsgemässen Überzugsmittel sind insbesondere solche Bindemittel geeignet, die als Basis Homopolybutadien enthalten. Die Molgewichte der Basispolymeren liegen im Bereich von 400 bis 6000, vorzugsweise 700 bis 5000, bzw. bei Verwendung von Butadienhomopolymerisaten im bevorzugten Bereich vom 850 bis 5000. Die Molgewichte werden dampfdruckosmometrisch bestimmt.

Im Rahmen der Erfindung werden vorzugsweise solche Butadienpolymerisate (Basispolymere) eingesetzt, bei denen mindestens 30%, vorzugsweise mehr als 40%, der vorhandenen Doppelbindungen 1,4-Doppelbindungen sind. Hiervon werden wiederum jene Produkte bevorzugt, bei denen mindestens 20% der insgesamt vorhandenen Doppelbindungen als cis-1,4-Doppelbindungen vorliegen. Bei Butadienpolymerisaten, deren Anteil an vinylartigen Doppelbindungen höchstens 40% beträgt, soll der Anteil an cis-1,4-Doppelbindungen mindestens 30% betragen.

Die Additionsverbindung wird durch Anlagerung von $\alpha$, $\beta$-ungesättigten Dicarbonsäuren an

die Butadienpolymerisate erhalten. Derartige Verfahren, sowie die dafür eingesetzten Dicarbonsäuren sind aus dem Stand der Technik grundsätzlich bekannt (DE-A-Nr. 2627635). Vorteilhafterweise einzusetzende α, β-ungesättigte Dicarbonsäuren weisen 8 C-Atome oder weniger auf, wie z. B. Maleinsäure, Chlormaleinsäure, Fumarsäure, Citraconsäure, 1,2-Diethylmaleinsäure. Anstelle der freien Dicarbonsäuren werden vorzugsweise jeweils die entsprechenden Säureanhydride verwendet. Besonders bevorzugt ist Maleinsäureanhydrid in Mengen von vorzugsweise 12 bis 25 Gew.%.

Besonders vorteilhaft und technisch einfach gestaltet sich die Teilveresterung der vorstehend beschriebenen Additionsverbindungen, wenn von solchen Verbindungen ausgegangen wird, bei denen die zu veresternde Disäurefunktion in der Anhydridform vorliegt. Die Veresterung kann dann unter milden Bedingungen erfolgen, ggf. in Gegenwart geringer Mengen üblicher basischer oder saurer Katalysatoren, in Anwesenheit der erfindungsgemässen ungesättigten Alkohole sowie ggf. der gesättigten Alkohole unter Bildung saurer Halbester.

Wenn nach der Veresterungsreaktion merkliche Mengen nicht umgesetzter Anhydridgruppen in der Additionsverbindung verbleiben, so empfiehlt es sich, diese ggf. nach der später beschriebenen Bindemittelvorkondensation vor der Neutralisation in bekannter Weise zu hydrolysieren. Insbesondere ist diese Massnahme dann angezeigt, wenn organische Basen zur Neutralisation verwendet werden, die mit Anhydridgruppen unter Ausbildung kovalenter Bindungen reagieren können.

Die teilweise veresterte Additionsverbindung der Komponente A. muss jedoch noch eine genügend hohe Restsäurerzahl aufweisen, um nach der Neutralisation eine ausreichende Wasserlöslichkeit bzw. -dispergierbarkeit zu besitzen. Diese Forderung ist in den meisten Fällen bei säurezahlen $\geqslant$ 40 mg KOH/g erfüllt. Zur Erzielung guter Verarbeitbarkeit und unter Berücksichtigung der besonderen Erfordernisse der Elektrotauchlakkierung als bevorzugter Applikationsform werden solche Produkte bevorzugt, die Säurezahlen zwischen 40 und 150, insbesondere zwischen 60 und 120, mg KOH/g aufweisen. Die teilweise veresterten Additionsverbindungen aus Butadienpolymerisaten und α, β-ungesättigten Decarbonsäuren können nach den Methoden des Standes der Technik wasserlöslich oder wasserdispergierbar gemacht werden. Dies geschieht dadurch, dass die Additionsverbindungen wenigstens teilweise mit Ammoniak oder einer anderen basischen Verbindung, wie beispielsweise einem organischen Amin oder einer anorganischen Alkaliverbindung neutralisiert werden. Beispiele für geeignete basische Verbindungen sind: Methylamin, Ethylamin, Ethylmethylamin, Dimethylamin, Diethylamin, Trimethylamin, Triethylamin; Mono-, Di- oder Tributylamine; Mono-, Di- oder Triethanolamine; N.N-Diethylethanolamin, N.N-Dimethylethanolamin, N-Methylmorpholin, Natriumhydroxid, Kaliumhydroxid, Ammoniumcarbonat.

Um eine hinreichende Wasserlöslichkeit bzw. -dispergierbarkeit der beschriebenen Bindemittel in Wasser zu erreichen, muss die zugegebene Menge an basischen Verbindungen genügend hoch gewählt werden. Je höher die Restsäurezahl der Additionsprodukte ist, desto geringere Neutralisationsgrade sind zur Erreichung des gewünschten Effektes zulässig. Die erforderliche Mindestmenge liegt in der Regel bei 0,3 bis 0,5 Äquivalenten Base/Säureäquivalent. In bezug auf die erfindungsgemässen Bindemittel bestehen jedoch keine Bedenken, selbst überstöchiometrische Mengen von beispielsweise 1,5 bis 2,0 Äquivalenten Base/Säureäquivalent anzuwenden. Dem Fachmann bleibt also die Möglichkeit, durch Variation des Neutralisationsgrades die anwendungstechnischen Eigenschaften der beanspruchten Überzugsmittel weit zu verändern und diese damit optimal an die jeweiligen apparativen Gegebenheiten und die bestehenden Applikationsprobleme, z. B. die anodische Abscheidung, anzupassen. Vorzugsweise werden jedoch die basischen Verbindungen im stöchiometrischen Unterschuss zugesetzt. Als günstig haben sich Neutralisationsgrade von 0,5 bis 0,8 Äquivalenten Base/Säureäquivalent erwiesen.

Die derart neutralisierten Bindemittel sind mit Wasser unbegrenzt verdünnbar. Die Praxis hat jedoch gezeigt, dass der Zusatz organischer Lösemittel oder Lösemittelmischungen eine leichtere Verarbeitbarkeit der Bindemittel bewirkt und zur Erhöhung der Stabilität der wässrigen Überzugsmittel bzw. zur Verbesserung des Verlaufs der noch nicht eingebrannten Überzüge beiträgt. Diese Massnahmen sind dem Fachmann grundsätzlich bekannt. Für den genannten Zweck eignen sich beispielsweise Isopropanol, Butanole, Diacetonalkohole, Alkylcellosolven und Dimethylether von Glykolen. Diese Lösemittel können in Mengen von bis zu 100 Gewichtsteilen, vorzugsweise 5 bis 50 Gewichtsteilen pro 100 Gewichtsteilen Bindemittel eingesetzt werden. Der Zusatz der Lösemittel erfolgt in der Regel vor, während oder nach der Neutralisationsstufe. Sofern es sich um inerte Lösemittel handelt, ist es gelegentlich sogar vorteilhaft, diese bereits vor der Veresterung den Additionsverbindungen zuzusetzen.

Im Rahmen der Erfindung wird die Komponente A. in Kombination mit wasserlöslichen bzw. -dispergierbaren Vernetzerharzen verwendet. Geeignete Harze, die in solchen Mischungen bei Erwärmen unter Ausbildung eines dreidimensionalen Netzwerkes reagieren, gehören z. B. zu den Bindemittelklassen der Phenolharze, Aminoharze und Isocyanatharze; ihre Herstellung und Anwendung sind beispielsweise beschrieben in H. Kittel, «Lehrbuch der Lacke und Beschichtungen», Verlag A. W. Colomb in der Heenemann GmbH, Stuttgart-Berlin; D. H. Parker, «Principles of Surface Coating Technology», Interscience Publishers, New York-London-Sydney, 1965; «Encyclopedia of Polymer Science and Technology», Interscience Publishers, New York-London-Sydney, 1965 -

1972; Kirk-Othmer, «Encyclopedia of Chemical Technology», Band 3; John Wiley & Sons, New York-Chichester-Brisbane-Toronto, 3. Auflage 1979.

Als Komponente B. des Bindemittels werden erfindungsgemäss wasserlösliche bzw. wasserdispergierbare Vernetzerharze verwendet, die mindestens 2 chemisch verschiedene, reaktive Gruppen besitzen. Die Gesamtmenge an reaktiven Gruppen pro mol soll im Mittel mindestens 2 betragen. Bevorzugt werden solche Vernetzerharze, die im Mittel mehr als 2,5, insbesondere mindestens 3, reaktive Gruppen pro mol besitzen: hiervon soll mindestens eine reaktive Gruppe pro mol der allgemeinen Formel (II)

$$-CH_2-\underset{R^1}{\underset{|}{C}}=CH-R^2 \quad (II)$$

entsprechen. Die Substituenten $R^1$ bzw. $R^2$ können gleich oder verschieden sein und Wasserstoff oder einen Methylrest darstellen.

Neben den reaktiven Gruppen der Formel (II) soll mindestens eine weitere reaktive Gruppe vorhanden sein. Im Rahmen der Erfindung eignen sich hierfür Methylol- und/oder Alkoxymethylgruppen von ggf. modifizierten, vernetzbaren Aminoplasten und Phenolharzen, die durch Umsetzung von Aldehyden, insbesondere Formaldehyd, mit Aminoverbindungen, wie z. B. Harnstoff oder Aminotriazine, bzw. mit phenolischen Verbindungen wie Phenolcarbonsäuren, in bekannter Weise herstellbar sind. Ferner sind blockierte Isocyanatgruppen als reaktive Gruppen geeignet. Entsprechende Verbindungen können nach bekannten Verfahren erhalten werden, beispielsweise durch die Umsetzung von isocyanatgruppenhaltigen Vernetzerharzen mit geeigneten Blockierungsmitteln, wie z. B. Caprolactam, Phenol oder aliphatischen Hydroxylverbindungen wie 2-Ethylhexanol.

Für den Fall, dass das verwendete Vernetzerharz selbst acide Gruppen, z. B. Carboxylgruppen trägt, ist jeweils zu prüfen, ob die mit der Komponente A. zugeführte Menge an basischer Verbindung ausreicht, um die Wasserverdünnbarkeit des Gesamtbindemittels zu gewährleisten. Ggf. ist die Menge an basischen Verbindungen entsprechend zu erhöhen.

Für die Komponente B. erweisen sich als besonders vorteilhaft Phenolharze vom Resoltyp, deren phenolische Hydroxylgruppen zu 50 bis 100% mit Allylalkohol verethert sind. Es handelt sich hierbei um Handelsprodukte; ihre Herstellung wird z. B. in US-A-Nr. 2579330 beschrieben.

Die erfindungsgemässen Bindemittel enthalten die Komponente A. zu 60 bis 95 Gew.%, vorzugsweise zu 70 bis 90 Gew.%, und die Komponente B. zu 5 bis 40 Gew.%, vorzugsweise 10 bis 30 Gew.%. Dabei soll die Summe der ungesättigten Strukturelemente gemäss den allgemeinen Formeln (I) und (II) vorzugsweise mindestens 0,5 mol pro kg Gesamtbindemittel aus Komponente A. und B. betragen.

Neben den erfindungsgemässen Vernetzerharzen können weitere Bindemittel, welche als Vernetzungsmittel wirken, wie beispielsweise wasserlösliche bzw. -dispergierbare, für den EC-Sektor übliche Aminoplaste oder Phenolharze in Mengen von höchstens 50 Gew.% bezogen auf Komponente B., mitverwendet werden.

Die Gesamtmenge an Vernetzerharzen soll 45 Gew.%, vorzugsweise 35 Gew.%, bezogen auf die Gesamtbindemittel nicht übersteigen. Daneben können bis zu 30 Gew.% der Komponente A. durch weitere übliche, für die anodische Elektrotauchlackierung geeignete, wasserlösliche bzw. -dispergierbare carboxylgruppenhaltige Harze beispielsweise auf Basis von Kohlenwasserstoffharzen, Dien(co)polymeren oder Epoxidesterharzen substituiert werden. Der Anteil der Komponente A. und B. am Gesamtbindemittel soll jedoch 65 Gew.%, nicht unterschreiten.

Die Komponente A. und B. der erfindungsgemässen Bindemittel und ggf. weitere Fremdharze können in physikalischer Mischung zu den beanspruchten Überzugsmitteln verarbeitet werden. In vielen Fällen, insbesondere bei Einsatz von Harzen mit relativ niedrigem Molgewicht bzw. niedriger Eigenviskosität, ist es vorteilhaft, die Mischung vor der Weiterverarbeitung einer Vorkondensation bei erhöhter Temperatur, z. B. bei 70 bis 150°C, zu unterwerfen. Solche Vorkondensate zeigen gegenüber den physikalischen Mischungen in der Regel verbesserte lacktechnische Eigenschaften, wie z. B. ein verbessertes elektrophoretisches Abscheideverhalten und eine bessere Bindemittel- und Pigmentverträglichkeit.

Die Überzugsmittel können noch Pigmente, Füllstoffe, Stabilisatoren sowie andere übliche Hilfs- und Zusatzstoffe enthalten.

Die erfindungsgemässen Überzugsmittel sind in erster Linie für die anodische Elektrotauchlackierung von metallischen Werkstoffen, insbesondere Stahl, geeignet. Für diesen Anwendungszweck werden sie auf einen Feststoffgehalt von 1 bis 30 Gew.%, vorzugsweise 5 bis 20 Gew.%, eingestellt. Zur elektrophoretischen Abscheidung können Spannungen im Bereich von 10 bis 500 V, vorzugsweise 50 bis 300 V, angelegt werden. Die Badtemperaturen sollten im Bereich von 10 bis 40°, vorzugsweise 20 bis 30°C, liegen. Sie können jedoch auch nach anderen bekannten Verfahren, wie Tauchen, Spritzen oder Fluten, appliziert werden; in diesen Fällen sind je nach Auftragsverfahren höhere Feststoffgehalte von z. B. 40 bis 60 Gew.% möglich.

Die erfindungsgemässen Überzugsmittel werden bei Temperaturen im Bereich von 120 bis 250, vorzugsweise 140 bis 190°C innerhalb von 10 bis 60, vorzugsweise 15 bis 40 min, eingebrannt. Die erfindungsgemässen wässrigen Überzugsmittel weisen eine ausgezeichnete Lagerstabilität auf. Sie stehen diesbezüglich den üblichen Überzugsmitteln des Standes der Technik auf Basis von Butadienpolymerisaten in nichts nach. Die mit den erfindungsgemässen Überzugsmitteln erhaltenen Beschichtungen zeigen gute Allgemeineigenschaften wie Härte, Elastizität und Wasserfestigkeit bei zugleich exzellentem Korrosionsschutz, eine Eigenschaftskombination, die von vergleichbaren Überzugsmitteln des Standes der Technik nicht erreicht wird.

*Beispiele*

A. *Basispolymere*

Für die Herstellung der Komponente A der erfindungsgemässen Überzugsmittel wurden die folgenden Basispolymeren (1) bis (4) eingesetzt:

1. Homopolybutadien (Iodzahl nach Wijs: 445; 1,4-cis:1,4-trans:Vinyl=73:25:2; Molgewicht: 1700; Viskosität/20°C: 0,8 Pa·s).
2. Homopolybutadien (Iodzahl nach Wijs: 435; 1,4-cis:1,4-trans:Vinyl=52:11:37; Molgewicht: 1600; Viskosität/20°C: 1,2 Pa·s).
3. Homopolybutadien (Iodzahl nach Wijs: 446; 1,4-cis:1,4-trans:Vinyl=33:47:20; Molgewicht: 4540; Viskosität/20°C: 3,9 Pa·s).
4. Homopolybutadien (Iodzahl nach Wijs: 436; 1,4-cis:1,4-trans:Vinyl=51:14:35; Molgewicht: 1500; Viskosität/20°C: 1,0 Pa·s).

B. *Herstellung der veresterten Additionsverbindungen*

1. 2451 g des Basispolymeren A.1 und 549 g Maleinsäureanhydrid (MSA) wurden in Gegenwart von 3 ml Acetylaceton und 36 g Cu-naphthenatlösung (10% Cu) unter Stickstoff in einer Rührapparatur 1 h bei 180°C und anschliessend 3 h bei 190°C umgesetzt. Das MSA-Addukt enthielt ≤0,1 Gew.% freies MSA und wies eine Säurezahl von 167 mg KOH/g (titriert mit KOH in Pyridin/Wasser) auf. 900 g des MSA-Adduktes wurden mit 70 g Allylalkohol in Gegenwart von 2 g Triethylamin während 1 h bei 80°C, dann 2 h bei 90°C und schliesslich 1 h bei 100°C verestert. Produkt B.1 wies eine Säurezahl von 95 mg KOH/g auf. Der Veresterungsgrad, bezogen auf die Säurezahl des MSA-Adduktes beträgt 40 Äquivalent%.

2. 900 g des vorstehend beschriebenen MSA-Adduktes wurden analog zunächst mit 38,9 g Allylalkohol bis zu einer Säurezahl von 122 mg KOH/g. entsprechend 24% Veresterung, und anschliessend mit 25,7 g Methanol verestert. Die Endsäurezahl von B.2 betrug 92 mg KOH/g entsprechend einem Gesamtveresterungsgrad von 41 Äquivalent%.

3. 900 g des MSA-Adduktes entsprechend B.1 wurden mit 87 g Crotylalkohol in Gegenwart von 3 g Triethylamin 1 h bei 80°C, 2 h bei 90°C und anschliessend 2 h bei 100°C umgesetzt. Die Säurezahl von Produkt B.3 betrug 90 mg KOH/g entsprechend einem Veresterungsgrad von 40 Äquivalent%.

4. 1225,5 g des Basispolymeren A.2, 274,5 g MSA und 0,45 g N.N'-Diphenyl-p-phenylendiamin wurden 1 h auf 180°C und anschliessend 3 h auf 190°C unter Stickstoff erhitzt. Der Gehalt an freiem MSA im Reaktionsprodukt betrug weniger als 0,1 Gew.%, als Säurezahl wurden 190 mg KOH/g ermittelt. 1400 g des so erhaltenen Adduktes wurden bei 60°C mit 173 g Diacetonalkohol verdünnt, und zu der Lösung wurden 154 g Methallylalkohol und 5 g Triethylamin getropft. Nach einer Reaktionszeit von 2 h bei 90°C und 2 h bei 100°C besass die Mischung eine Säurezahl von 104 mg KOH/g, bezogen auf das Bindemittel. Der Veresterungsgrad errechnet sich zu 40 Äquivalent%.

5. Entsprechend den in B. wiedergegebenen Arbeitsweisen wurden die in der Tabelle 1 angeführten Bindemittel B.5 bis B.8 sowie X hergestellt.

*Tabelle 1*

Kennzahlen gemäss B.5
(Gewichtsverhältnis Basispolymer: MSA=81,7:18,3)

| Additionsverbindung Nr. | Basispolymer | Alkohol | Veresterungsgrad*) [%] | Säurezahl [mg KOH/g] |
|---|---|---|---|---|
| B.5 | A.1 | Buten-1-ol-(3) | 33 | 104 |
| B.6 | A.2 | Allylalkohol | 40 | 104 |
| B.7 | A.3 | Allylalkohol | 40 | 107 |
| B.8 | A.4 | Allylalkohol | 33 | 111 |
| X | A.3 | Methanol | 44 | 105 |

*) berechnet mit Bezug auf die Säurezahl des MSA-Adduktes

C. *Zubereitung von Überzugsmitteln und Überzügen*

*Beispiel 1*

Eine Mischung aus 340 g der 90%igen Lösung des Produktes B.4, 54 g eines handelsüblichen allylgruppenhaltigen Phenolharzes (METHYLON®-Harz 75108) und 120,3 g Diacetonalkohol wurde 2 h bei 100°C vorkondensiert. In die resultierende Vorkondensatlösung wurden 57,6 g $TiO_2$, 46,8 g Kaolinit und 3,6 g Russ eingerührt und diese Mischung vermahlen.

450 g Paste wurden mit 83,7 g 5%igen wässrigen Ammoniak verrührt, und anschliessend wurde auf 2603 g mit vollentsalztem Wasser aufgefüllt. Bindemittelgehalt: 10 Gew.% (davon entfallen 85 Gew.% auf Komponente A. und 15 Gew.% auf Komponente B.); Pigmentgehalt: 30 Gew.%, bezogen auf Bindemittel; pH-Wert: 7,2.

Nach 48stündigem Reifen des Überzugsmittels bei 40°C liess sich bei einer Badtemperatur von 25°C und einer angelegten Spannung von 140 V innerhalb von 2 min auf einem als Anode geschalteten, zinkphosphatierten Stahlblech ein Film abscheiden, der nach dem Abspülen mit vollentsalztem Wasser und Einbrennen bei 180°C/20 min einen von Oberflächenstörungen freien, elastischen Überzug mit einer Schichtstärke von 25 μ ergab.

*Beispiele 2 bis 8 sowie A bis D*

Entsprechend Beispiel 1 wurden wässrige Überzugsmittel bereitet und anodisch abgeschiedene Überzüge (25μ Trockenschichtstärke) hergestellt.

*Tabelle 2*

Blasenbildung im Salzsprühtest
(ASTM B 117 35°C, 5%ige NaCl-Lösung)

| Beispiel Nr. | Additions-verbindung Nr. | Gew.% Zusatzharz (bez. auf Gesamtbindemittel) | Salzsprühtest [h]/ Anzahl der Blasen von der Grösse ≥ g 2** |
|---|---|---|---|
| A | B.1 | 15 R* | 750 / m 3 |
| 2 | B.1 | 15 AR* | 750 / m 1 |
| 3 | B.1 | 25 AR | >1000 / m 0 |
| 4 | B.3 | 15 AR | 750 / m 1-2 |
| 5 | B.5 | 15 AR | 750 / m 1-2 |
| 6 | B.8 | 15 AR | 750 / m 1-2 |
| 7 | B.2 | 15 AR | >1000 / m 0 |
| 8 | B.7 | 15 AR | 750 / m 1**** |
| B | B.7 | — | 500 / m 2 |
| C | X | — | 240 / m 1-2*** |
| D | X | 15 AR | 500 / m 2***** |

* AR = allylverethertes Phenolharz vom Resoltyp (METHYLON®-Harz 75108)
R = Phenolharz vom Resolcarbonsäuretyp

** Angegeben sind die Dauer [h] des Salzsprühtestes bis Blasen der Grösse ≥g 2 auftreten, sowie deren Anzahl [m] zu diesem Zeitpunkt. Beurteilung der Blasen erfolgt nach DIN 53209.
Beurteilungszyklus: 168-240-336-500-750-1000 h

*** nach 500 h Rissbildung und weitgehender Haftungsverlust

**** nach 1000 h: m 2-3, gute Resthaftung

***** nach 750 h versprödet, Rissbildung und weitgehender Haftungsverlust

*Tabelle 3*

Blasenbildung bei Lagerung in vollentsalztem Wasser bei 40°C, gemessen an 25 μ Filmen

| Beispiel Nr. | Additions-verbindung Nr. | Tage bis zum Auftreten von Blasen > g 2 / Menge¹) | Abriss²) (% der Fläche) |
|---|---|---|---|
| 8 | B.7 | >14 / m 0 | 0 |
| B | B.7 | 7 / m 4 | ca. 10 |
| C | X | 2 / m 5 | ca. 80 |
| D | X | 4 / m 5 | ca. 30 |

¹) Beurteilung der Blasen nach DIN 53 209; Durchführung des Tests in Anlehnung an ISO 1521: die lackierten Bleche wurden zur Hälfte in vollentsalztes Wasser in einen mit Deckel versehenen Glaskasten gestellt; Prüftemperatur 40 ± 1°C. Beurteilt wurden nach 2, 4, 7, 9 und 14 d sowohl die eingetauchte als auch die im Dampfraum befindliche Fläche.

²) 1 h nach Entnahme der Platten aus dem Wasser bei Testende (14 d) und Lagerung bei Raumklima wird die Haftung durch Abriss mit einem 50 mm-Kreppband geprüft.

*Beispiel 9*

306 g des Produktes B.6, 54 g des handelsüblichen Phenolharzes gemäss Beispiel 1 und 154,3 g Diacetonalkohol wurden gemischt und 4 h bei 100°C vorbehandelt. Nach dem Abkühlen wurden 90 g micronisiertes Talkum, 14,4 g Rutil und 3,6 g Russ zugefügt und die Mischung auf einem Dreiwalzenstuhl abgerieben. Zu 452 g der erhaltenen

Paste wurden 150 g Wasser und 30 g 15%iges Ammoniak gegeben. Nach 20 min intensiver Durchmischung wurde mit 1983 g Wasser aufgefüllt. Das wässrige Überzugsmittel wies einen pH-Wert von 7,5 auf.

Bei 140 V wurden auf zinkphosphatiertem Stahlblech 25 μ-Filme abgeschieden und bei 180°C/20′ eingebrannt. Im Salzsprühtest nach ASTM B 117 zeigten diese Filme nach 1008 h weder Blasen- oder Rissbildung noch Haftungsverlust; die Korrosionsunterwanderung der Lackschicht, ausgehend von einem vor der Prüfung angebrachten Schnitt bis auf das blanke Metall, betrug nach 1008 h im Mittel 1 mm, ihr Maximalwert 2 mm.

Entsprechende Prüfplatten, die zunächst 24 h dem Salzsprühtest und anschliessend 1000 h dem Tropentest unterworfen wurden, zeigten keinerlei Blasenbildung oder Filiformkorrosion.

Mit Buchstaben gekennzeichnete Versuche sind nicht erfindungsgemäss.

## Patentansprüche

1. Wärmehärtbares wässriges Überzugsmittel für Metalloberflächen auf der Grundlage einer Mischung aus Bindemittel, ggf. organischem Lösemittel sowie ggf. Pigmenten, Füllstoffen und weiteren üblichen Hilfs- und Zusatzstoffen, das als Bindemittel

A. 60 bis 95 Gew.% einer wasserlöslichen bzw. wasserdispergierbaren, mit basischen Verbindungen zumindest teilweise neutralisierten und veresterten Additionsverbindungen aus 10 bis 35 Gew.% einer oder mehrerer α, β-ungesättigter Dicarbonsäuren und 65 bis 90 Gew.% eines bei 20°C flüssigen Butadienpolymerisats mit mindestens 50 mol% Butadieneinheiten und einem Molgewicht im Bereich von 400 bis 6000, und

B. 5 bis 40 Gew.% eines wasserlöslichen bzw. wasserdispergierbaren Vernetzerharzes mit im Mittel mindestens 2 reaktiven Gruppen pro mol enthält,

dadurch gekennzeichnet,

dass die Additionsverbindung (A) zu 10 bis 70 Äquivalentprozent, bezogen auf die Säurezahl, mit einem oder mehreren Alkoholen der allgemeinen Formel (I)

$$R^4-CH=\underset{R^1}{\underset{|}{C}}-\underset{R^2}{\underset{|}{CH}}-(\underset{R^3}{\underset{|}{CH}})_n-OH \qquad (I)$$

verestert ist und dass mindestens eine der reaktiven Gruppen des Vernetzerharzes (B) der allgemeinen Formel (II)

$$-CH_2-\underset{R^1}{\underset{|}{C}}=CH-R^2 \qquad (II)$$

entspricht, wobei in den allgemeinen Formeln (I) und (II) $R^1$, $R^2$ und $R^3$ gleich oder ungleich sein können und Wasserstoff oder eine Methylgruppe bedeuten, $R^4$ Wasserstoff oder eine Alkylgruppe mit 1 bis 5 C-Atomen bedeutet und n für 0 oder 1 steht.

2. Überzugsmittel gemäss Anspruch 1, dadurch gekennzeichnet, dass das Vernetzerharz (B) ein resolartiges Kondensationsprodukt aus einem Phenol und Formaldehyd darstellt, dessen phenolische Hydroxylgruppen zu 50 bis 100% mit Allylalkohol verethert sind.

3. Verwendung der Überzugsmittel gemäss den Ansprüchen 1 und 2 für die anodische Tauchlackierung.

## Claims

1. A heat-hardenable aqueous coating composition for metallic surfaces which is based on a mixture of a binder, optionally an organic solvent and optionally pigments, fillers and other conventional assistants and additives, the mixture containing, as binder,

A) 60 to 95 percent by weight of a water-soluble or water-dispersible addition compound of 10 to 35 percent by weight of one or more α, β-unsaturated dicarboxylic acids and 65 to 90 percent by weight of a butadiene polymer which is liquid at 20°C and has at least 50 mol percent of butadiene units and a molecular weight in the range from 400 to 6,000, the addition compound being at least partly neutralised with a basic compound and esterified, and

B) 5 to 40 percent by weight of a water-soluble or water-disponible crosslinking resin with an average of at least 2 reactive groups per mol,

characterized in that 10 to 70 equivalent percent, based on the acid number, of the addition compound (A) is esterified with one or more alcohols of the general formula I

$$R^4-CH=\underset{R^1}{\underset{|}{C}}-\underset{R^2}{\underset{|}{CH}}-(\underset{R^3}{\underset{|}{CH}})_n-OH \qquad (I)$$

and in that at least one of the reactive groups of the crosslinking resin (B) has the general formula II

$$-CH_2-\underset{R^1}{\underset{|}{C}}=CH-R^2 \qquad (II)$$

$R^1$, $R^2$ and $R^3$ in the general formulae I and II being identical or different and denoting hydrogen or methyl, $R^4$ denoting hydrogen or an alkyl group of 1 to 5 carbon atoms, and n denoting 0 or 1.

2. A coating composition according to claim 1, characterized in that the crosslinking resin (B) is a resole-type condensation product of a phenol and formaldehyde, 50 to 100 percent of its phenolic hydroxyl groups being etherified with allyl alcohol.

3. The use of a coating composition according to claims 1 and 2 for anodic dip coating.

## Revendications

1. Agent de revêtement aqueux thermodurcissable pour surfaces métalliques, à base d'un mélange de liant, éventuellement de solvant organique et, le cas échéant, de pigments, charges et autres adjuvants et additifs usuels, qui contient comme liant:

A) de 60 à 95% en poids d'un composé d'addition soluble ou dispersible dans l'eau, neutralisé au moins partiellement par des composés basiques et estérifié, formé de 10 à 35% en poids d'un ou plusieurs acides dicarboxyliques α, β-insaturés et de 65 à 90% en poids d'un produit de polymérisation de butadiène, liquide à 20°C, comprenant au moins 50 mol pour cent d'unités butadiène et ayant un poids moléculaire compris entre 400 et 6000, et

B) de 5 à 40% en poids d'une résine de réticulation soluble dans l'eau, ou dispersible dans l'eau, contenant en moyenne au moins 2 groupes réactifs par mole,

ledit agent de revêtement étant caractérisé par le fait que le composé d'addition (A) est estérifié à raison de 10 à 70% équivalents, relativement à l'indice d'acide, avec un ou plusieurs alcools de la formule générale (1)

$$R^4{-}CH{=}\underset{\substack{|\\R^1}}{C}{-}\underset{\substack{|\\R^2}}{CH}{-}(\underset{\substack{|\\R^3}}{CH})_n{-}OH \qquad (I)$$

et qu'au moins un des groupes réactifs de la résine de réticulation (B) répond à la formule générale (II)

$$-CH_2{-}\underset{\substack{|\\R^1}}{C}{=}CH{-}R^2 \qquad (II)$$

$R^1$, $R^2$ et $R^3$ pouvant, dans les formules générales (I) et (II), être identiques ou différents et représenter de l'hydrogène ou un groupe méthyle, $R^4$ représentant de l'hydrogène ou un groupe alkyle comportant de 1 à 5 atomes de carbone, et n étant égal à 0 ou à 1.

2. Agent de revêtement selon la revendication 1, caractérisé par le fait que la résine de réticulation (B) constitue un produit de réticulation du type résol tiré d'un phénol et du formaldéhyde et dont les groupes hydroxyle phénolique sont éthérifiés à raison de 50 à 100% par l'alcool allylique.

3. Application des agents de revêtement selon les revendications 1 et 2 au peinturage anodique par immersion.